# EUROPÄISCHE PATENTANMELDUNG

(11) **EP 4 707 639 A1**
(43) Veröffentlichungstag der Anmeldung: **11.03.2026**
(21) Anmeldenummer: 24199216.3
(22) Anmeldetag: 09.09.2024
(51) Int. Cl.: F16H 47/06, F16H 47/08, F16H 61/64, F03B 17/06

(54) **GETRIEBE FÜR EIN FAHRZEUG**

(71) Anmelder: FNF Innovation Sh.P.K., 60000 Gjilan, Kosovo (AL)
(72) Erfinder: FEHMI, Mustafa, Gjilan, Kosovo (AL)
(74) Vertreter: Kador & Partner Part mbB

(57) **Zusammenfassung**

Die vorliegende Erfindung betrifft ein Getriebe für ein Fahrzeug, ein Verfahren zum Betreiben des Getriebes, eine Verwendung des Getriebes in einem Antrieb eines Fahrzeug und ein Fahrzeug. Das Getriebe umfasst: eine Antriebswelle (14), einen Flüssigkeitsbehälter (10) zur Speicherung von Hydraulikflüssigkeit, mindestens eine Turbine (2, 2a, 25, 26, 18), die auf einer Turbinenwelle (17) mit mindestens einem ersten Zahnrad (55, 70, 90, 110) angeordnet ist und in ihrem Eintrittskanal (34) ein Einlassventil (3) aufweist, das dazu eingerichtet ist, Hydraulikflüssigkeit in die Turbine (2, 2a, 25, 26, 18) zu leiten, um diese anzutreiben, eine Pumpe (13), die mit der Antriebswelle (14) verbunden und dazu eingerichtet ist, Hydraulikflüssigkeit aus dem Flüssigkeitsbehälter (10) mit einem bestimmten Druck zu den Einlassventilen (3) der mindestens einen Turbine (2, 2a, 25, 26, 18) zu fördern, eine Rücklaufleitung (50), die einen Austrittskanal (31) der mindestens einen Turbine (2, 2a, 25, 26, 18) mit dem Flüssigkeitsbehälter (10) verbindet, eine Abtriebswelle (39), auf der ein oder mehrere zweite Zahnräder (65, 80, 100) angeordnet sind, und mindestens eine Kette (130, 131, 132, 133), die mit dem mindestens einen ersten Zahnrad (55, 70, 90, 110) der Turbinenwelle (17) der mindestens einen Turbine (2, 2a, 25, 26, 18) und einem der zweiten Zahnräder (65, 80, 100) der Abtriebswelle (39) in Eingriff bringbar ist.

## Beschreibung

Die vorliegende Erfindung betrifft ein Getriebe für ein Fahrzeug mit einer hydrodynamischen und einer mechanischen Übersetzungseinheit.

Im Stand der Technik bekannt sind Automatikgetriebe, die einen hydrodynamischen Drehmomentwandler aufweisen, der üblicherweise zwischen Motor und Getriebe eines Fahrzeugs angeordnet ist.

Beispielsweise zeigt DE 19 859 761 A1 ein Automatikgetriebe für ein Fahrzeug umfassend einen hydrodynamischen Wandler, ein Gehäuse, das an seinem dem hydrodynamischen Wandler zugewandten Ende mit einer Zwischenplatte versehen ist, Steuer- und Betätigungseinrichtungen für die im Gehäuse vorgesehene Kupplung und Bremsen sowie eine Pumpe zur Versorgung dieser Einrichtungen. Die dem hydrodynamischen Wandler zugewandte Zwischenplatte des Getriebegehäuses nimmt die Pumpe auf, welche auf einer Leitradwelle des hydrodynamischen Wandlers gelagert ist.

Die vorliegende Erfindung hat sich zum Ziel gesetzt, ein Getriebe für ein Fahrzeug mit einer hydrodynamischen und einer mechanischen Übersetzungseinheit bereitzustellen, mit dem Effizienz und Fahrkomfort des Fahrzeugs gesteigert werden können.

Die vorliegende Erfindung stellt daher ein Getriebe für ein Fahrzeug zur Verfügung, das eine Antriebswelle, einen Flüssigkeitsbehälter zur Speicherung von Hydraulikflüssigkeit sowie mindestens eine Turbine enthält, die auf einer Turbinenwelle mit mindestens einem ersten Zahnrad angeordnet ist.

Insbesondere kann das Getriebe eine Vielzahl von Turbinen umfassen, von denen jede auf einer separaten Turbinenwelle mit einem ersten Zahnrad angeordnet ist. Es ist ebenso möglich, dass das Getriebe nur eine einzelne Turbine aufweist, die auf einer Turbinenwelle mit einem ersten Zahnrad angeordnet ist.

Gemäß einer Ausführungsform kann die mindestens eine Turbine ein Gehäuse mit einer Lagerung umfassen, in der die Turbinenwelle drehbar gelagert ist. Das erste Zahnrad kann als ein erstes Übertragungselement zur Übertragung einer Drehbewegung der Turbinenwelle auf eine Abtriebswelle des Getriebes dienen. Es können auch mehr als ein erstes Zahnrad auf der Turbinenwelle angebracht sein.

Das Turbinengehäuse kann insbesondere zweiteilig ausgeführt und die beiden Teile können miteinander verschraubt sein. Jede andere geeignete Verbindung der beiden Gehäuseteile ist ebenso möglich.

Die mindestens eine Turbine weist zudem in ihrem Eintrittskanal ein Einlassventil auf, über das Hydraulikflüssigkeit in die Turbine geleitet wird, um diese anzutreiben.

Die Antriebswelle kann an einer Seite mit einem Motor des Fahrzeugs verbunden sein und von diesem angetrieben werden. Bei dem Motor kann es sich beispielsweise um einen Verbrennungsmotor und/oder einen Elektromotor handeln.

Des Weiteren enthält das Getriebe eine Pumpe, die mit einer dem Motor gegenüberliegenden Seite der Antriebswelle verbunden ist und Hydraulikflüssigkeit aus dem Flüssigkeitsbehälter mit einem bestimmten Druck zu dem Einlassventil in dem Eintrittskanal der mindestens einen Turbine fördert. Bei der Pumpe kann es sich beispielweise um eine Zahnradpumpe handeln. Jede andere geeignete Pumpe ist ebenso möglich. Die Pumpe kann in Abhängigkeit von einer Drehzahl der Antriebswelle beispielsweise einen Druck im Bereich von 1,5 bar bis 100 bar bereitstellen.

Der Flüssigkeitsbehälter kann z.B. an einer Karosserie oder einem Rahmen des Fahrzeugs angebracht bzw. befestigt sein und eine verschließbare Öffnung zum Befüllen und Entleeren der Hydraulikflüssigkeit aufweisen. Bei der Hydraulikflüssigkeit kann es sich um eine Flüssigkeit auf Mineralöl- oder auf Wasserbasis handeln. Insbesondere kann die Hydraulikflüssigkeit ein Hydrauliköl sein.

Zudem umfasst das Getriebe eine Rücklaufleitung, die einen Ausgang der mindestens einen Turbine mit dem Flüssigkeitsbehälter verbindet.

Auf diese Weise kann das Getriebe eine hydrodynamische Übersetzungseinheit mit einen geschlossenen Hydraulikkreislauf ausbilden, in dem Hydraulikflüssigkeit aus dem Flüssigkeitsbehälter zu der mindestens einen Turbine gefördert wird und von dort über die Rücklaufleitung wieder zurück in den Flüssigkeitsbehälter fließt. Mittels der Pumpe wird über die Antriebswelle eingespeiste mechanische Energie in hydraulische Energie umgewandelt, welche die mindestens eine Turbine antreibt, wodurch an deren Turbinenwelle ein höheres Drehmoment vorliegen kann als an der Antriebswelle. Dies ermöglicht es auf eine zusätzliche Anfahrkupplung zu verzichten, da diese Funktion von der mindestens einen Turbine übernommen werden kann. Mit anderen Worten kann die mindestens eine Turbine als hydrodynamischer Wandler mit einer bestimmten Wandlerkennlinie dienen.

Die Wandlerkennlinie kann insbesondere eine Drehmomentübersetzung zwischen Antriebs- und Turbinenwelle in Abhängigkeit von deren Drehzahlverhältnis angeben. Alternativ oder zusätzlich kann die Wandlerkennlinie ein Drehmoment an der Turbinenwelle in Abhängigkeit von einer Turbinendrehzahl bei einem bestimmten Druck vor Turbine angeben.

Sofern das Getriebe z.B. eine Vielzahl von Turbinen enthält, so können diese einen gleichen Durchmesser aufweist. Zudem können alle Turbinen ein gleiches Schluckvolumen und/oder eine gleiche Anzahl Turbinenschaufeln aufweisen. Das Getriebe kann beispielsweise vier, fünf oder sechs Turbinen enthalten. Eine größere oder kleinere Anzahl von Turbinen ist ebenso möglich.

Auf der Abtriebswelle des Getriebes sind ein oder mehrere zweite Zahnräder angeordnet, die als zweites Übertragungselement zur Übertragung einer Drehbewegung der Turbinenwelle auf die Abtriebswelle dienen können. Sind in dem Getriebe z.B. eine oder eine Vielzahl von Turbinen mit jeweils einer Turbinenwelle mit einem ersten Zahnrad enthalten, so kann eine Anzahl von zweiten Zahnrädern auf der Abtriebswelle insbesondere einer Anzahl von ersten Zahnrädern entsprechen.

Die Abtriebswelle kann zwei Ausgänge aufweisen, von denen mindestens einer mit einem oder mehreren Rädern des Fahrzeugs verbunden sein kann. Dabei können zwischen der Abtriebswelle und den Rädern weitere Übertragungselemente (z.B. Wellen, Zahnräder, Kupplungen etc.) vorhanden sein. Mittels der beiden Ausgänge der Abtriebswelle ist auch ein Allradantrieb an dem Fahrzeug möglich.

Gemäß einer Ausführungsform kann jedes der zweiten Zahnrädern eine andere Zähnezahl aufweist. Mittels der unterschiedlichen Zähnezahlen der zweiten Zahnräder kann jede Kombination aus erstem Zahnrad der mindestens einen Turbine und zweitem Zahnrad der Abtriebswelle ein unterschiedliches Übersetzungsverhältnis zwischen Antriebs- und Abtriebswelle bereitstellen, wodurch ein benötigtes Drehmoment an der Abtriebswelle optimal eingestellt werden kann.

Als drittes Übertragungselement zur Übertragung einer Drehbewegung der Turbinenwelle auf die Abtriebswelle umfasst das Getriebe mindestens eine Kette, die mit dem mindestens einen ersten Zahnrad der Turbinenwelle der mindestens einen Turbine und einem der zweiten Zahnrädern der Abtriebswelle in Eingriff bringbar ist. Ein Kombination aus erstem Zahnrad, zweitem Zahnrad und Kette kann insbesondere als Kettentrieb bezeichnet werden. Folglich kann das hier vorgestellte Getriebe einen oder mehrere Kettentrieben aufweisen.

Sind in dem Getriebe beispielsweise eine oder eine Vielzahl von Turbinen mit jeweils einer Turbinenwelle mit einem ersten Zahnrad enthalten und entspricht die Anzahl von zweiten Zahnrädern auf der Abtriebswelle der Anzahl erster Zahnräder, so kann eine Anzahl von Ketten ebenfalls der Anzahl von ersten bzw. zweiten Zahnrädern entsprechen.

Es ist jedoch ebenso möglich, dass das Getriebe z.B. nur eine Turbine mit einem ersten Zahnrad und eine Abtriebswelle mit mehreren zweiten Zahnrädern enthält. In diesem Fall kann z.B. nur eine Kette darin enthalten sein, die mit jedem der zweiten Zahnräder in Abhängigkeit von dem gewünschten Übersetzungsverhältnis in Eingriff bringbar ist. In diesem Fall kann das Getriebe z.B. eine Umwerfvorrichtung umfassen, welche einen Wechsel der Kette zwischen den einzelnen zweiten Zahnrädern durchführen kann.

Somit weist das Getriebe im Anschluss an die hydrodynamische Übersetzungseinheit eine mechanische Übersetzungseinheit auf, mittels derer unterschiedliche Übersetzungsverhältnisse zwischen Turbinenwelle und Abtriebswelle eingestellt werden können, welche unterschiedliche Übersetzungsverhältnisse zwischen Antriebs- und Abtriebswelle zur Folge haben können. Dabei kann, z.B. durch eine entsprechende Auswahl eines zweiten Zahnrads auf der Abtriebswelle, das Übersetzungsverhältnis sowohl kontinuierlich als auch sprunghaft erhöht oder erniedrigt werden. Mit anderen Worten kann z.B. von einem ersten in einen zweiten und nachfolgend in einen dritten Gang oder direkt von dem ersten in den dritten Gang geschaltet werden und vice versa.

Die mindestens eine Turbine kann ein Gehäuse mit einer Lagerung umfassen, in der die Turbinenwelle drehbar gelagert ist.

Gemäß einer Ausführungsform kann die mindestens eine Turbine einen Rotor mit einer Vielzahl von Turbinenschaufeln umfassen, der fest mit der Turbinenwelle verbunden sein kann. Die feste Verbindung des Rotors mit der Turbinenwelle kann z.B. als Pressverbindung, Keilverbindung oder Schraubverbindung ausgeführt sein. Jede andere geeignete Welle-Nabe-Verbindung ist ebenfalls möglich. Zwischen Stirnseiten des Rotors und einer Innenseite des Gehäuses der Turbine kann in deren axialer Richtung jeweils ein Dichtring angebracht sein.

Alternativ kann der Rotor über einen Turbinenfreilauf mit der Turbinenwelle verbindbar sein. Insbesondere kann der Rotor in diesem Fall als Turbinenfreilauf ausgeführt sein. Dieser kann eine Außen- und eine Innenseite aufweisen, die beispielsweise als Außenring und Innenring ausgebildet sein können. Der Außenring kann dabei z.B. mit der Turbine und der Innenring mit der Turbinenwelle fest verbunden sein. In diesem Fall kann zwischen Stirnseiten des Innenrings und einer Innenseite des Turbinengehäuses in deren axialer Richtung jeweils ein Dichtring angebracht sein. Der Außen- und Innenring können gegeneinander sperren (Mitnahmemodus) oder freilaufen (Freilaufmodus), wobei im Mitnahmemodus ein Drehmoment über den Außenring des Turbinenfreilaufs eingeleitet und über den Innenring auf die Turbinenwelle übertragen werden kann. Insbesondere kann sich der Turbinenfreilauf in einer Drehrichtung der angetriebenen Turbine im Mitnahmemodus und entgegen deren Drehrichtung im Freilaufmodus befinden.

Gemäß einer Ausführungsform kann die Vielzahl von Turbinenschaufeln beweglich an dem Rotor befestigt sein. Wenn die Turbine mittels eines Turbinenfreilaufs mit der Turbinenwelle verbunden ist, so können die Turbinenschaufeln insbesondere beweglich an dessen Außenring angebracht sein.

Insbesondere können die beweglichen Turbinenschaufeln von einer radialen Richtung in eine tangentiale Richtung des Rotors bzw. des Turbinenfreilaufs bewegt werden. Unter einer radialen Richtung des Rotors bzw. Turbinenfreilaufs soll dabei eine Richtung senkrecht zu einem Umfang des Rotors bzw. Außenrings des Turbinenfreilaufs verstanden werden. Dementsprechend soll unter einer tangentialen Richtung des Rotors bzw. Turbinenfreilaufs eine Richtung tangential zu dem Umfang des Rotors bzw. Außenrings des Turbinenfreilaufs verstanden werden.

Um die Turbinenschaufeln wie beschrieben zu bewegen, können die beweglichen Befestigungen der Turbinenschaufeln an dem Rotor bzw. Außenring des Turbinenfreilaufs als Scharniere ausgeführt sein, die z.B. eine Klappbewegung um einen Winkel im Bereich von 80° bis 100°, insbesondere um einen Winkel von 90° aus der radialen Richtung in die tangentiale Richtung des Turbinenfreilaufs erlauben. Jede andere bewegliche Befestigung, welche die beschriebene Bewegung erlaubt, ist ebenso möglich.

Gemäß einer Ausführungsform kann die mindestens eine Turbine einen zu der Turbinenwelle konzentrischen Umlaufkanal aufweisen, der den Eintrittskanal und den Austrittskanal der Turbine verbindet, und in dem sich die Turbinenschaufeln in radialer Richtung des Rotors erstrecken, um Hydraulikflüssigkeit zu fördern.

Der Umlaufkanal kann eine Kreisbogenform aufweisen und so ausgestaltet sein, dass ein Mittelpunktswinkel eines der Form des Umlaufkanals zugrundeliegenden Kreisbogens zwischen Eintritts- und Austrittskanal zumindest 30°, weiter bevorzugt zumindest 60°, weiter bevorzugt zumindest 90°, weiter bevorzugt zumindest 120° und noch weiter bevorzugt zumindest 160° beträgt. Üblicherweise beträgt dieser Mittelpunktswinkel 180°. Zweckmäßigerweise kann der Umlaufkanal parallel zu einer Ebene senkrecht zu einer Achse der Turbinenwelle in dem Turbinengehäuse angeordnet sein. Ein Durchmesser des Umlaufkanals kann zweckmäßigerweise gleich oder größer als eine Länge der Turbinenschaufeln sein, damit diese sich in radialer Richtung des Rotors erstrecken können, um Hydraulikflüssigkeit zu fördern.

Gemäß einer Ausführungsform kann der der Eintrittskanal dazu eingerichtet sein, die Hydraulikflüssigkeit in tangentialer Richtung zu einem zu der Turbinenwelle konzentrischen Kreis in den Umlaufkanal einzuleiten. Ebenso kann der Austrittskanal dazu eingerichtet sein, die Hydraulikflüssigkeit in tangentialer Richtung zu dem zu der Turbinenwelle konzentrischen Kreis aus dem Umlaufkanal herauszuleiten.

Dabei kann durch den Eintrittskanal mit einer Strömungsgeschwindigkeit vₑᵢₙ in den Umlaufkanal tangential eintretende Hydraulikflüssigkeit auf im Umlaufkanal befindliche Vorderseiten der Turbinenschaufeln drücken und somit eine Rotation des Rotors in Strömungsrichtung der Hydraulikflüssigkeit bewirken. Die Hydraulikflüssigkeit kann nach dem Umlauf im Umlaufkanal mit einer Strömungsgeschwindigkeit vₐᵤₛ durch den Austrittskanal tangential aus der Turbine austreten.

Dies kann insbesondere mit einem konstanten Moment und mit tangentialer Wirkung erfolgen, d.h. die Strömungsrichtung der Hydraulikflüssigkeit kann an jedem Punkt im Umlaufkanal tangential zu dessen Kreisbogenform sein, wobei der Druck der Hydraulikflüssigkeit im Eintrittskanal pₑᵢₙ nahezu gleich dem der Hydraulikflüssigkeit im Austrittskanal pₐᵤₛ ist. Mit anderen Worten kann die tangentiale Wirkung an jedem Punkt während des gesamten Umlaufs der Hydraulikflüssigkeit im Umlaufkanal bestehen, wodurch ein hoher Wirkungsgrad erreicht werden kann.

Vorzugsweise ist der Umlaufkanal Teil eines ringförmig, konzentrisch um den Rotor ausgebildeten Gesamtkanals, der Öffnungen für den Eintrittskanal und den Austrittskanal sowie einen Sperrbereich aufweist. Der Sperrbereich kann zweckmäßigerweise ein Kanal zwischen dem Austrittskanal und dem Eintrittskanal sein, dessen Durchmesser kleiner als eine Länge der Turbinenschaufeln ist. In diesem erstrecken sich die Turbinenschaufeln vorzugsweise in tangentialer Richtung des Rotors und fördern keine Hydraulikflüssigkeit. In dem Sperrbereich kann eine Sperrvorrichtung vorhanden sein, die zumindest teilweise, vorzugsweise vollständig, verhindert, dass Hydraulikflüssigkeit, die sich im Bereich des Austrittskanals befindet, zurück zum Eintrittskanal gelangen kann. Somit kann verhindert werden, dass bezüglich der in der Turbine umlaufend strömenden Hydraulikflüssigkeit ein "Kurzschluss" erfolgt.

Die Sperrvorrichtung kann beispielsweise durch ein Zusammenwirken der beweglichen Turbinenschaufeln mit einer Geometrie des Turbinengehäuses in dem Sperrbereich realisiert werden. Beispielsweise kann ein Querschnitt des Kanals zwischen dem Austrittskanal und dem Eintrittskanal mittels der Turbinenschaufeln versperrt werden. Die Sperrbereich kann dabei insbesondere so ausgebildet sein, dass eine Bewegung der Turbinenschaufeln von der radialen Richtung in die tangentiale Richtung des Rotors bewirkt wird. Dies kann beispielsweise dadurch erfolgen, dass ein den Turbinenschaufeln im ausgeklappten Zustand zur Verfügung stehenden Kanalquerschnitt bei Rotation des Rotors durch den Sperrbereich kontinuierlich immer weiter einschränkt, bis ein vollständiges Einklappen der jeweiligen Turbinenschaufel erreicht ist.

Gemäß einer Ausführungsform können der Umlaufkanal und der Sperrbereich durch eine außermittige Anordnung des Rotors in dem Gehäuse gebildet sein. Die außermittige Anordnung kann derart gewählt werden, dass der Umlaufkanal einen Durchmesser aufweist, der gleich oder größer als eine Länge der Turbinenschaufeln ist, und der Kanal, welcher den Sperrbereich bildet, einen Durchmesser aufweist der kleiner als eine Länge der Turbinenschaufeln ist. Insbesondere kann der Sperrbereich in der Mitte zwischen Austritts- und Eintrittskanal seinen kleinsten Durchmesser aufweisen. Dadurch werden die Turbinenschaufeln bis zur Mitte des Sperrbereichs kontinuierlich eingeklappt und versperren dabei den "Kurzschlusskanal". Nachfolgend können sich die Turbinenschaufeln durch die Aufweitung des Sperrbereichs kontinuierlich von der tangentialen in die radiale Richtung des Rotors bewegen und diese im Eintrittskanal wieder einnehmen.

Gemäß einer Ausführungsform kann stromaufwärts der mindestens einen Turbine eine Sammelleitung angeordnet sein. Mit anderen Worten kann sich die Sammelleitung zwischen der Pumpe und der mindestens einen Turbine befinden.

In der Sammelleitung kann beispielsweise Hydraulikflüssigkeit mit einem bestimmten Druck gespeichert sein, und die Pumpe kann Hydraulikflüssigkeit in die Sammelleitung fördern, um den bestimmten Druck bereitzustellen bzw. aufrechtzuerhalten. Bei Öffnen des Einlassventils der mindestens einen Turbine kann die gespeicherte hydraulische Energie dann in kinetische Energie zum Antreiben der Turbine umgewandelt werden.

Gemäß einer Ausführungsform kann jedes der zweiten Zahnrädern über einen Zahnradfreilauf mit der Abtriebswelle verbindbar sein. Der Zahnradfreilauf kann analog zu dem Turbinenfreilauf eine Außen- und eine Innenseite aufweisen, die beispielsweise als Außenring und Innenring ausgebildet sein können. Der Außenring kann dabei z.B. mit dem jeweiligen zweiten Zahnrad und der Innenring mit der Abtriebswelle fest verbunden sein. Der Außen- und Innenring jedes Zahnradfreilaufs können gegeneinander sperren (Mitnahmemodus) oder freilaufen (Freilaufmodus), wobei im Mitnahmemodus ein Drehmoment über den Außenring des Zahnradfreilaufs eingeleitet und über den Innenring auf die Abtriebswelle übertragen werden kann. Insbesondere kann sich jeder Zahnradfreilauf in einer Drehrichtung der Abtriebswelle im Mitnahmemodus und entgegen deren Drehrichtung im Freilaufmodus befinden. Die Drehrichtung der Abtriebswelle kann insbesondere einer Drehrichtung der mindestens einen Turbine entsprechen und eine Vorwärtsfahrt des Fahrzeugs bewirken.

Gemäß einer Ausführungsform kann die Abtriebswelle mit einem Planetenradsatz verbunden sein. Dieser kann insbesondere dazu eingerichtet sein, eine Rückwärtsfahrt des Fahrzeugs zu ermöglichen.

In einer Ausführungsform kann der Planetenradsatz ein Sonnenrad mit einer Sonnenradwelle, einen Planetenradträger mit mindestens einem Planetenrad und ein Hohlrad enthalten. Insbesondere können drei Planetenräder auf dem Planetenradträger angeordnet sein. Das Hohlrad kann zusätzlich eine Außenverzahnung aufweisen und drehbar auf der Abtriebswelle gelagert sein, und der Planetenradträger kann fest mit der Abtriebswelle verbunden sein.

Gemäß einer Ausführungsform kann die mindestens eine Kette mit der Außenverzahnung des Hohlrads und dem mindestens einen ersten Zahnrad der Turbinenwelle der mindestens einen Turbine in Eingriff bringbar sein. Wenn ein solcher Eingriff der Kette vorliegt und die Turbine mit Hydraulikflüssigkeit beaufschlagt wird, so wird das Hohlrad von der Turbine angetrieben und dreht sich in Drehrichtung der Turbine, welche der üblichen Drehrichtung der Abtriebswelle bei Vorwärtsfahrt des Fahrzeugs entspricht.

Da in diesem Fall die Abtriebswelle nicht über eines der zweiten Zahnräder angetrieben wird, steht der Planetenradträger still. Um einen Stillstand des Planetenträgers sicherzustellen, kann dieser bei Bedarf zusätzlich, z.B. mittels eines Bremsbands, blockiert werden. Bei stillstehendem Planetenradträger läuft das mindestens eine Planetenrad auf einer Innenverzahnung des Hohlrads und einer Außenverzahnung des Sonnenrads ab. Dadurch dreht sich das Sonnenrad und die mit diesem verbundene Sonnenradwelle in entgegengesetzter Richtung zu dem Hohlrad und somit auch entgegen der üblichen Drehrichtung der Abtriebswelle.

Die Sonnenradwelle kann zweckmäßiger einen der beiden Ausgänge der Abtriebswelle darstellen und mit einem oder mehreren Rädern des Fahrzeugs verbunden sein. Auf diese Weise kann eine Rückwärtsfahrt desselben ermöglicht werden. Aufgrund eines großen Übersetzungsverhältnisses zwischen Hohlrad und Sonnenrad kann zudem eine Drehzahl der Sonnenradwelle und damit eine Geschwindigkeit des Fahrzeugs bei Rückwärtsfahrt begrenzt werden.

Wenn die mindestens eine Kette nicht mit der Außenverzahnung des Hohlrads, sondern mit einem der zweiten Zahnräder der Abtriebswelle in Eingriff ist bzw. eine andere als die Turbine, welche das Hohlrad antreibt mit Hydraulikflüssigkeit beaufschlagt wird, dreht sich der mit der Abtriebswelle verbundene Planetenradträger in deren üblicher Drehrichtung und treibt mittels des mindestens einen Planetenrads das Sonnenrad mit der Sonnenradwelle an. In diesem Fall dreht sich die Sonnenradwelle mit der gleichen Geschwindigkeit in die gleiche Richtung wie die Abtriebswelle und der Planetenradsatz trägt nicht zu dem Übersetzungsverhältnis zwischen Antriebs- und Abtriebs- bzw. Sonnenradwelle bei.

Alternativ oder zusätzlich können das Sonnenrad, der Planetenradträger und/oder das Hohlrad in bekannter Weise angetrieben oder blockiert werden, um mittels des Planetenradsatzes zusätzliche Übersetzungsverhältnisse zu realisieren. Auf diese Weise sind z.B. bis zu zwölf Übersetzungen bzw. Gänge mit dem hier vorgestellten Getriebe möglich.

Gemäß einer Ausführungsform kann das Getriebe eine Recheneinheit umfassen, die ein benötigtes Drehmoment an der Abtriebswelle bestimmt und das Einlassventil der mindestens einen Turbine in Abhängigkeit von dem benötigten Drehmoment steuert. Das benötigte Drehmoment an der Abtriebswelle kann beispielsweise von der Recheneinheit basierend auf einem Fahrerwunschmoment, einer Drehzahl des Motors und/oder einer Fahrgeschwindigkeit des Fahrzeugs bestimmt werden. Dabei kann das Fahrerwunschmoment z.B. auf einer Gaspedalstellung des Fahrzeugs basieren. Anstelle eines Gaspedals kann das Fahrzeug eine beliebige Vorrichtung zur Vorgabe des Fahrerwunschmoments enthalten.

Es ist ebenso möglich, dass die Recheneinheit das Einlassventil der mindestens einen Turbine basierend auf einer manuellen Eingabe eines Fahrers steuert. Bei dem Einlassventil kann es sich um elektrisch betätigbares Ventil, z.B. um ein Magnetventil oder ein Ventil mit einem elektrischen Stellantrieb handeln. Zum Betätigen (Öffnen und/oder Schließen) des Einlassventils kann die Recheneinheit z.B. ein entsprechendes Ansteuersignal an dieses senden, um beispielsweise eine Magnetspule zu bestromen oder einen elektrischen Stellantrieb anzutreiben.

Gemäß einer Ausführungsform kann in einem Austrittskanal der mindestens einen Turbine zudem ein Auslassventil angeordnet sein. Bei dem Auslassventil kann es sich insbesondere um ein mechanisches Ventil handeln. Beispielsweise kann ein Flatterventil zum Einsatz kommen, das mittels einer Druckdifferenz zwischen einem Innenraum und einer äußeren Umgebung der mindestens einen Turbine geöffnet werden kann.

Gemäß einer Ausführungsform kann die Recheneinheit das Einlassventil der mindestens einen Turbine öffnen, wenn das benötigte Drehmoment an der Abtriebswelle größer als eine erste vorbestimmte Drehmomentschwelle ist. Die erste vorbestimmte Drehmomentschwelle kann dabei auf einen Wert festgelegt werden, der sicherstellt, dass bei Überschreiten desselben ein Antrieb der Abtriebswelle vom Fahrer gewünscht ist. Beispielsweise kann dieser Wert auf null gesetzt werden. Um Toleranzen bei der Bestimmung des benötigten Drehmoments an der Abtriebswelle zu berücksichtigen, kann der Wert größer null, z.B. in einem Bereich 0% bis 0,7% des maximalen Abtriebsmoments gewählt werden.

Durch das Öffnen des Einlassventils kann Hydraulikflüssigkeit, die mit einem bestimmten Druck vor diesem anliegt, in die Turbine geleitet und diese angetrieben werden. Auf diese Weise wird an der Turbinenwelle ein Drehmoment erzeugt, das über einen der Vielzahl von Kettentrieben an die Abtriebswelle übertragen werden kann.

Wenn das Getriebe z.B. eine Vielzahl von Turbinen enthält kann die Recheneinheit das Einlassventil derjenigen Turbine öffnen, die einen Kettentrieb antreibt, dessen Übersetzungsverhältnis geeignet ist, das benötigte Drehmoment an der Abtriebswelle bereitzustellen, während die Einlassventile der anderen Turbinen geschlossen bleiben. Dazu können beispielsweise die Übersetzungsverhältnisse der einzelnen Kettentriebe in der Recheneinheit gespeichert sein, anhand derer in Verbindung mit dem an der Turbinenwelle anliegenden Drehmoment ein mögliches Abtriebswellenmoment bestimmt werden kann.

Die Recheneinheit kann das benötigte Drehmoment an der Abtriebswelle mit den möglichen Abtriebswellenmomenten der einzelnen Kettentriebe vergleichen und das Einlassventil der Turbine öffnen, welche den geeigneten Kettentrieb antreibt.

Das Einlassventil der gewählten Turbine kann für eine bestimmte Zeit geöffnet bleiben und nachfolgend wieder geschlossen werden. Beispielsweise kann das Einlassventil der Turbine geöffnet bleiben, solange ein von dieser angetriebene Kettentrieb das benötigte Drehmoment z.B. in einem bestimmten Motordrehzahlbereich bereitstellen kann. Wenn dies nicht mehr der Fall ist, kann das Einlassventil dieser Turbine geschlossen und ein Einlassventil einer Turbine, die einen Kettentrieb mit einem anderen Übersetzungsverhältnis antreibt, geöffnet werden, sofern das benötigte Drehmoment an der Abtriebswelle noch immer größer als die erste vorbestimmte Drehmomentschwelle ist.

Es ist ebenso möglich, dass der Fahrer des Fahrzeugs über eine manuelle Eingabe, z.B. auf einem Display des Fahrzeugs, eine Turbine auswählt, deren Einlassventil geöffnet werden soll. Auf diese Weise kann der Fahrer gezielt ein Übersetzungsverhältnis zwischen Antriebswelle und Abtriebswelle wählen. Diese gezielte manuelle Auswahl kann von der Recheneinheit gegenüber einer automatische Auswahl einer Turbine zum Antrieb eines Kettentriebs in Abhängigkeit des benötigten Drehmoments an der Abtriebswelle priorisiert werden.

Gemäß einer Ausführungsform kann ein Ausgang der Pumpe über eine Rückströmleitung, die ein Rückströmventil aufweist, mit dem Flüssigkeitsbehälter verbunden sein. Insbesondere kann die Rückströmleitung von einer Leitung bzw. einem Leitungsabschnitt zwischen der Pumpe und der ersten Sammelleitung abzweigen. Dadurch kann bei geöffnetem Rückströmventil keine Hydraulikflüssigkeit von der Pumpe in die Sammelleitung gefördert werden, sondern diese wird umgehend zurück in den Flüssigkeitsbehälter geleitet. Auf diese Weise kann ein Antrieb der Abtriebswelle bei Betrieb des Motors unterbrochen werden.

Gemäß einer Ausführungsform kann die Recheneinheit das Rückströmventil öffnen, wenn das benötigte Drehmoment an der Abtriebswelle kleiner als eine zweite vorbestimmte Drehmomentschwelle ist. Das benötigte Drehmoment an der Abtriebswelle kann beispielsweise nach einem Start des Motors, solange der Fahrer noch kein Wunschmoment z.B. über das Gaspedal anfordert, kleiner als die zweite vorbestimmte Drehmomentschwelle sein. Die Rückströmleitung mit dem Rückströmventil ermöglicht es somit, einen Leerlaufbetrieb des Motors bei direkter Anbindung bzw. Kopplung des Getriebes an den Motor einzustellen. Auf diese Weise kann auf eine zusätzliche Kupplung zwischen Motor und Getriebe verzichtet werden. Es ist ebenso möglich, dass der Fahrer das Rückströmventil über eine manuelle Eingabe, z.B. auf dem Display des Fahrzeugs oder mittels eines Schalters, direkt öffnen und/oder schließen kann, um den Leerlaufbetrieb des Motors ein- oder abzustellen.

Die zweite vorbestimmte Drehmomentschwelle kann auf einen gleichen Wert wie die erste vorbestimmte Drehmomentschwelle festgelegt werden. Es ist ebenso möglich, dass die zweite vorbestimmte Drehmomentschwelle größer oder kleiner als die erste vorbestimmte Drehmomentschwelle gewählt wird. Beispielsweise kann die zweite vorbestimmte Drehmomentschwelle kleiner als die erste vorbestimmte Drehmomentschwelle gewählt werden, so das zunächst das Rückströmventil geschlossen wird, bevor eines der Einlassventile der Turbinen geöffnet wird.

Insbesondere kann die Recheneinheit das Rückströmventil bei einem Start des Motors automatisch öffnen. Somit ist sichergestellt, dass das Fahrzeug nicht ungewollt losfährt. Sobald der Fahrer z.B. über das Gaspedal ein Wunschmoment anfordert und das benötigte Drehmoment an der Abtriebswelle die zweite vorbestimmte Drehmomentschwelle überschreitet, kann die Recheneinheit das Rückströmventil schließen und das Einlassventil der mindestens einen Turbine öffnen. Der Start des Motors kann z.B. mittels einer manuellen Eingabe auf dem Display des Fahrzeugs erfolgen. Der Startbefehl kann von dort an die Recheneinheit des Getriebes gesendet werden. In gleicher Weise kann das Fahrzeug wieder gestoppt werden. Es ist ebenso möglich, dass das Fahrzeug über einen Schalter zum Starten und Stoppen des Motors verfügt.

Das Getriebe wird in einem Antrieb eines Fahrzeugs verwendet. Bei einem erfindungsgemäßen Fahrzeug kann es sich beispielsweise um einen Pkw, einen Lkw, eine Landmaschine, eine Baumaschine etc. handeln.

Bei dem erfindungsgemäßen Verfahren zum Betreiben eines Getriebes wie oben beschrieben wird ein benötigtes Drehmoment an einer Abtriebswelle des Getriebes bestimmt und in Abhängigkeit von dem benötigten Drehmoment ein Einlassventil von mindestens einer Turbine gesteuert. Wie oben beschrieben, sind auf der Abtriebswelle des Getriebes ein oder mehrere zweite Zahnräder angeordnet, die jeweils eine unterschiedliche Zähnezahl aufweisen können. Die mindestens eine Turbine ist auf einer Turbinenwelle mit einem ersten Zahnrad angeordnet, und mindestens eine Kette ist mit dem ersten Zahnrad und einem der zweiten Zahnräder in Eingriff bringbar. Ein Kombination aus erstem Zahnrad, zweitem Zahnrad und Kette kann insbesondere als Kettentrieb bezeichnet werden.

Wie oben beschrieben, kann das Getriebe insbesondere eine Vielzahl von Turbinen enthalten, die jeweils auf einer separaten Turbinenwelle mit einem ersten Zahnrad angeordnet sind. In diesem Fall kann das Getriebe auch eine Vielzahl von Ketten aufweisen, wobei jede Kette mit einem ersten Zahnrad einer Turbinenwelle und einem zweiten Zahnrad der Abtriebswelle in Eingriff bringbar ist.

Gemäß einer Ausführungsform kann das Einlassventil der mindestens einen Turbine geöffnet werden, wenn das benötigte Drehmoment an der Abtriebswelle größer als eine erste vorbestimmte Drehmomentschwelle ist. Dadurch kann Hydraulikflüssigkeit, die sich z.B. in einer ersten Sammelleitung vor dem Einlassventil befinden und einen bestimmten Druck aufweisen kann, in die Turbine geleitet und diese angetrieben werden. Die Hydraulikflüssigkeit kann mittels einer Pumpe aus einem Flüssigkeitsbehälter in die Sammelleitung gefördert werden.

Wenn das Getriebe z.B. eine Vielzahl von Turbinen aufweist, kann das Einlassventil der Turbine geöffnet werden, deren Kettentrieb ein geeignetes Übersetzungsverhältnis aufweist, um das benötigte Drehmoment an der Abtriebswelle bereitzustellen. Dazu können beispielsweise die Übersetzungsverhältnisse der einzelnen Kettentriebe in der Recheneinheit gespeichert sein, anhand derer in Verbindung mit dem an der Turbinenwelle anliegenden Drehmoment ein mögliches Abtriebswellenmoment bestimmt werden kann.

In dem Austrittskanal der mindestens einen Turbine kann ein Auslassventil angeordnet sein.

Weiterhin kann stromaufwärts der mindestens einen Turbine eine Sammelleitung angeordnet sein.

Ein Ausgang der Pumpe kann über eine Rückströmleitung, die ein Rückströmventil aufweist, mit dem Flüssigkeitsbehälter verbunden sein.

Wenn das benötigte Drehmoment an der Abtriebswelle kleiner als eine zweite vorbestimmte Drehmomentschwelle ist, kann hingegen ein Rückströmventil in einer Rückströmleitung, die einen Ausgang der Pumpe des Getriebes mit dem Flüssigkeitsbehälter verbindet, geöffnet werden. Dadurch wird von der Pumpe gefördertes Hydraulikflüssigkeit wieder in den Flüssigkeitsbehälter zurückgeführt und gelangt nicht in die Sammelleitung bzw. in die mindestens eine Turbine. Gleichzeitig mit dem Öffnen des Rückströmventils kann zusätzlich das Einlassventil der mindestens einen Turbine geschlossen werden. Auf diese Weise wird bei Antrieb der Pumpe durch den Motor die Abtriebswelle nicht angetrieben und das Fahrzeug befindet sich im Stillstand. Wenn das Fahrzeug bewegt werden soll und somit das benötigte Drehmoment an der Abtriebswelle die zweite vorbestimmte Drehmomentschwelle überschreitet, wird das Rückströmventil geschlossen, so dass mittels der Pumpe wieder ein bestimmter Druck in der Sammelleitung erzeugt werden kann. Dann wird das Einlassventil der mindestens einen Turbine geöffnet, wobei in diesem Fall insbesondere ein Kettentrieb angetrieben werden kann, der geeignet ist, ein benötigtes Übersetzungsverhältnis zum Anfahren des Fahrzeugs bereitzustellen.

Insbesondere kann das Rückströmventil bei einem Start des Motors automatisch öffnen. Somit ist sichergestellt, dass das Fahrzeug nicht ungewollt losfährt. Sobald der Fahrer z.B. über das Gaspedal ein Wunschmoment anfordert und das benötigte Drehmoment an der Abtriebswelle die zweite vorbestimmte Drehmomentschwelle überschreitet, kann das Rückströmventil geschlossen und das Einlassventil der mindestens einen Turbine geöffnet werden.

### Beispiele

Ausführungsformen des erfindungsgemäßen Getriebes werden im Folgenden unter Bezugnahme auf die Figuren näher beschrieben. In den Figuren sind gleiche oder ähnliche Elemente mit gleichen Bezugszeichen versehen. Daher wird auf eine wiederholende Beschreibung verzichtet, sofern diese nicht notwendig ist.
Figur 1 zeigt in vereinfachter schematischer Schnittdarstellung eine Draufsicht eines hydrodynamisches Getriebes gemäß einem Ausführungsbeispiel der Erfindung.
Fig. 2 zeigt in vereinfachter schematischer Schnittdarstellung einen Querschnitt durch eine Turbine gemäß einer weiteren Ausführungsbeispiel der Erfindung, die in dem in Figur 1 dargestellten Getriebe zum Einsatz kommen kann
Figur 3 zeigt die Turbine aus Figur 2 in einer Seitenansicht.
Figur 4 zeigt in vereinfachter schematischer Schnittdarstellung eine Frontansicht eines Planetenradsatzes, der in dem in Figur 1 dargestellten Getriebe zum Einsatz kommen kann.

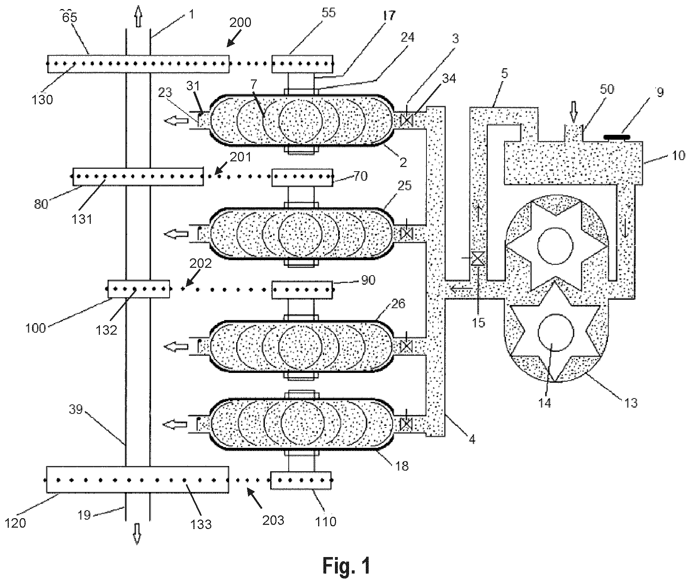

Die in Figur 1 dargestellte Ausführungsform eines erfindungsgemäßen Getriebes für ein Fahrzeug (nicht dargestellt), enthält einen Flüssigkeitsbehälter 10 mit einer verschließbaren Öffnung 9, eine Pumpe 13 mit einer Antriebswelle 14, die vorliegend als Zahnradpumpe 13 ausgeführt ist, und vier Turbinen 2, 25, 26, 18.

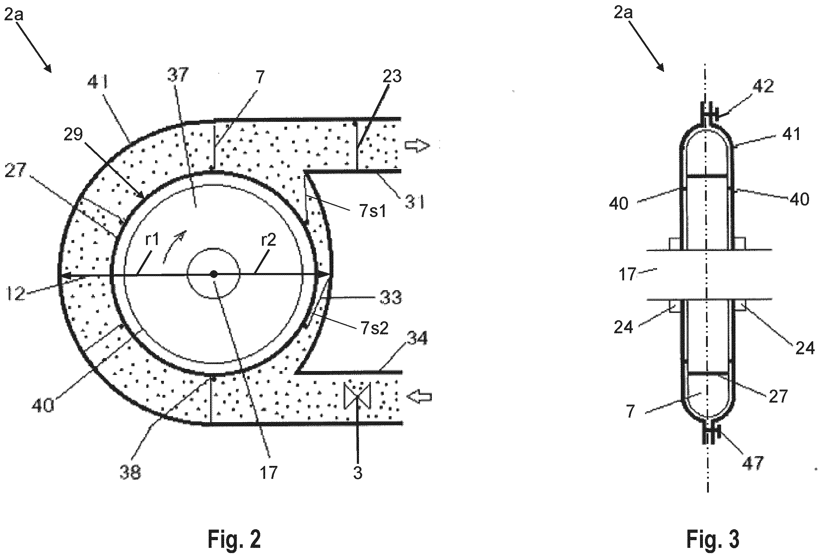

Jede Turbine 2, 25, 26, 18 ist vorliegend auf einer separaten Turbinenwelle 17 angeordnet und enthält eine Vielzahl von Turbinenschaufeln 7, die in einem Gehäuse 41 (siehe Figur 2) angeordnet sind. Die Turbinenwellen 17 sind jeweils mittels einer Lagerung 24 drehbar in dem Gehäuse 41 gelagert und weisen jeweils an einem Ende ein erstes Zahnrad 55, 70, 90, 110 auf. Vorliegend haben die ersten Zahnräder 55, 70, 90, 110 den gleichen Durchmesser und die gleiche Zähnezahl. Es ist jedoch ebenso möglich, dass die ersten Zahnräder 55, 70, 90, 110 unterschiedlich ausgeführt sind. Die Lagerung 24 jeder Turbinenwelle 17 enthält vorliegend zwei Lager 24, die an gegenüberliegenden Seiten des Gehäuses 41 angebracht sind.

Die dargestellten Turbinen 2, 25, 26, 18 weisen einen gleichen Durchmesser, eine gleiche Anzahl von Turbinenschaufeln 7, ein gleiches Schluckvolumen und somit auch eine gleiche Wandlerkennlinie auf. Aus Gründen der Übersichtlichkeit sind die einzelnen Elemente der Turbinen 2, 25, 26, 18 nur an einer Turbine 2 bezeichnet.

Die Wandlerkennlinie kann insbesondere eine Drehmomentübersetzung zwischen Antriebs- und Turbinenwelle 14, 17 bei Betrieb der entsprechenden Turbine 2, 25, 26, 18 in Abhängigkeit von einem Drehzahlverhältnis zwischen Antriebs- und Turbinenwelle 14, 17 angeben. Alternativ oder zusätzlich kann die Wandlerkennlinie ein Drehmoment an der Turbinenwelle 17 in Abhängigkeit von einer Turbinendrehzahl der betriebenen Turbine 2, 25, 26, 18 (bzw. einer daraus resultierenden Turbinenwellendrehzahl) bei einem bestimmten Druck vor der Turbine 2, 25, 26, 18 angeben.

Die Antriebswelle 14 der Zahnradpumpe 13 kann insbesondere direkt mit einem Motor (nicht dargestellt) des Fahrzeugs verbunden sein. Bei dem Fahrzeugmotor kann es sich um einen Verbrennungsmotor und/oder um einen Elektromotor handeln.

Die Zahnradpumpe 13 fördert Hydraulikflüssigkeit (durch Punkte angedeutet) von dem Flüssigkeitsbehälter 10 zu einer Sammelleitung 4, die stromaufwärts der Turbinen 2, 25, 26, 18 angeordnet ist. In dieser kann die Hydraulikflüssigkeit mit einem bestimmten Druck vorliegen, und die Zahnradpumpe 13 kann kontinuierlich Hydraulikflüssigkeit in die Sammelleitung 4 fördern, um den bestimmten Druck bereitzustellen bzw. aufrechtzuerhalten. Die Zahnradpumpe 13 kann in Abhängigkeit von einer Drehzahl der Antriebswelle 14 einen Druck im Bereich von 1,5 bar bis 50 bar bereitstellen.

Von der Sammelleitung 4 zweigen vier Eintrittskanäle 34 in die einzelnen Turbinen 2, 25, 26, 18 ab, in denen jeweils ein Einlassventil 3 angebracht ist. Die erste Sammelleitung 4 ist dabei derart an den Turbinen 2, 25, 26, 28 angebracht, dass die vier Eintrittskanäle 34 eine gleiche Länge aufweisen. Bei den Einlassventilen 3 kann es sich um elektrisch betätigbare Ventile, z.B. um Magnetventile oder Ventile mit einem elektrischen Stellantrieb handeln. Diese können von einer Recheneinheit (nicht dargestellt) des Getriebes zum Öffnen und/oder Schließen der Eintrittskanäle 34 angesteuert werden.

Stromabwärts jeder Turbine 2, 25, 26, 18 ist vorliegend jeweils ein Austrittskanal 31 mit einem mechanischen Auslassventil 23 angeordnet. Bei den Auslassventilen 23 kann es sich beispielsweise um Flatterventile handeln, die mittels einer Druckdifferenz zwischen einem Innenraum des Turbinengehäuses 41 und einer äußeren Umgebung der Turbine 2, 25, 26, 18 geöffnet werden können. Aus den Austrittskanälen 31 der Turbinen 2, 25, 26, 18 austretende Hydraulikflüssigkeit kann über eine nur ausschnittsweise dargestellte Rücklaufleitung 50 zurück in den Flüssigkeitsbehälter 10 fließen.

Auf diese Weise kann das Getriebe eine hydrodynamische Übersetzungseinheit mit einen geschlossenen Hydraulikkreislauf ausbilden, in dem Hydraulikflüssigkeit aus dem Flüssigkeitsbehälter 10 zu den vier Turbinen 2, 25, 26, 18 gefördert wird und von dort über die Rücklaufleitung 50 wieder zurück in den Flüssigkeitsbehälter 10 fließt. Mittels der Zahnradpumpe 13 wird über die Antriebswelle 14 eingespeiste mechanische Energie in hydraulische Energie umgewandelt, welche eine der Turbinen 2, 25, 26, 18 antreibt, wodurch an deren Turbinenwelle 17 ein höheres Drehmoment vorliegen kann als an der Antriebswelle 14. Auf diese Weise wirkt die angetriebene Turbine 2, 25, 26, 18 als hydrodynamischer Wandler mit einer bestimmten Wandlerkennlinie und ermöglicht es, auf eine zusätzliche Anfahrkupplung zu verzichten.

Zudem umfasst das dargestellte Getriebe eine Abtriebswelle 39 auf der vorliegend drei zweite Zahnräder 65, 80, 100 angebracht sind.

Die Abtriebswelle 39 weist an ihren beiden Enden einen ersten Ausgang 1 und einen zweiten Ausgang 19 auf, von denen mindestens einer mit einem oder mehreren Rädern (nicht dargestellt) des Fahrzeugs verbunden sein kann. Dabei können zwischen der Abtriebswelle 39 und den Rädern weitere Übertragungselemente (z.B. Wellen, Zahnräder, Kupplungen etc.) vorhanden sein (nicht dargestellt). Mittels der beiden Ausgänge 1, 19 der Abtriebswelle 39 ist auch ein Allradantrieb an dem Fahrzeug möglich.

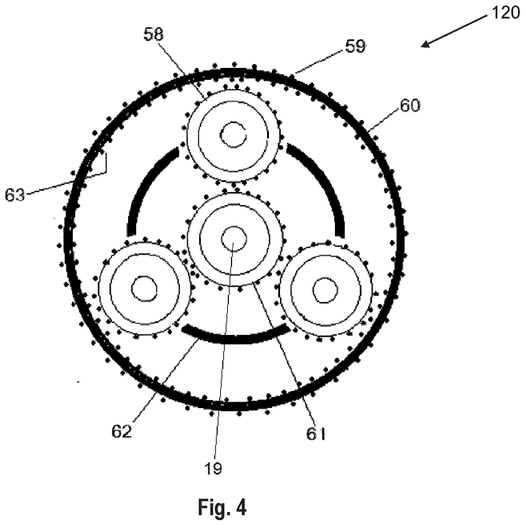

Die Abtriebswelle ist mit einem Planetenradsatz 120 verbunden, der ein Sonnenrad 61 mit einer Sonnenradwelle 19 aufweist, die vorliegend den zweiten Ausgang 19 der Abtriebswelle 39 bildet, (siehe auch Figur 4).

Die zweiten Zahnräder 65, 80, 100 haben einen unterschiedlichen Durchmesser sowie unterschiedliche Zähnezahlen und bieten dadurch in Verbindung mit den ersten Zahnrädern 55, 70, 90, 110 die Möglichkeit, unterschiedliche Übersetzungsverhältnisse zwischen der Turbinenwelle 17 und der Abtriebswelle 39 darzustellen. Dazu sind vorliegend jeweils ein erstes Zahnrad 55, 70, 90 und ein zweites Zahnrad 65, 80, 100 bzw. ein erstes Zahnrad 110 und der Planetenradsatz 120 mittels einer Kette 130, 131, 132, 133 gekoppelt. Das vorliegende Getriebe weist somit neben der hydrodynamischen Übersetzungseinheit auch eine mechanische Übersetzungseinheit auf. Es liegen dabei vier Kettentriebe 200, 201, 202, 203 vor, die mittels der Turbinen 2, 25, 26, 18 einzeln angetrieben werden können. Dazu können die zweiten Zahnräder 65, 80, 100 vorliegend jeweils mittels eines Zahnradfreilaufs (nicht dargestellt) mit der Abtriebswelle 39 verbindbar sein.

Jeder der Zahnradfreiläufe kann eine Außen- und eine Innenseite aufweisen, die beispielsweise als Außenring und Innenring ausgebildet sein können. Der Außenring kann dabei z.B. mit dem jeweiligen zweiten Zahnrad 65, 80, 100 und der Innenring mit der Abtriebswelle 39 fest verbunden sein. Der Außen- und Innenring der Zahnradfreiläufe können gegeneinander sperren (Mitnahmemodus) oder freilaufen (Freilaufmodus), wobei im Mitnahmemodus ein Drehmoment über den Außenring des jeweiligen Zahnradfreilaufs eingeleitet und über dessen Innenring auf die Abtriebswelle 39 übertragen werden kann. Insbesondere können sich die Zahnradfreiläufe in einer Drehrichtung der Abtriebswelle im Mitnahmemodus und entgegen deren Drehrichtung im Freilaufmodus befinden. Die Drehrichtung der Abtriebswelle 39 kann insbesondere einer Drehrichtung der antreibenden Turbine 2, 25, 26 entsprechen und eine Vorwärtsfahrt des Fahrzeugs bewirken.

Aufgrund der beschriebenen Zahnradfreiläufe ist die Abtriebswelle 39 jeweils nur mit dem antreibenden Kettentrieb 200, 201, 202 verbunden und die Innenringe der anderen Zahnradfreiläufe drehen sich frei mit der Abtriebswelle 39 mit. Auf diese Weise kann die Kette 130, 131, 132, 133 jedes Kettentriebs 200, 201, 202, 203 jederzeit auf den beiden Zahnrädern 55, 65; 70, 80; 90, 100; 110,120 verbleiben und muss zum Wechseln eines Übersetzungsverhältnisses nicht abgeworfen werden.

Die ersten Zahnräder 55, 70, 90 und die zweiten Zahnräder 65, 80, 100 sind jeweils in einer Ebene angeordnet, woraus eine gerade Kettenline der Ketten 130, 131, 132 zwischen den beiden Zahnrädern 55, 65; 70, 80; 90, 100 jedes Kettentriebs 200, 201, 202 resultiert, die sich vorteilhaft auf dessen Geräuschemissionen und Verschleiß auswirkt. Die Turbine 18, welche den Kettentrieb 203 mit dem Planetenradsatz 120 antreibt, ist aus diesem Grund in umgekehrter Richtung zu den anderen Turbinen 2, 25, 26, angeordnet, so dass deren Turbinenwelle 17 mit dem ersten Zahnrad 110 in entgegengesetzte Richtung zeigt, um eine gerade Kettenlinie der Kette 133 in Verbindung mit dem Hohlrad 60 des Planetensatzes 120 zu bilden. Der Planetenradsatz 120 dient insbesondere dazu, eine Rückwärtsfahrt des Fahrzeugs zu ermöglichen, wie nachfolgend in Verbindung mit Figur 4 erläutert wird.

In dem gezeigten Ausführungsbeispiel sind die Eintrittskanäle 34 und die Austrittskanäle 31 auf gegenüberliegenden Seiten der Turbinen 2, 25, 26, 18 angeordnet. Dabei befinden sich die Eintritts- und Austrittskanäle 34, 31 in einer Ebene, wodurch ein symmetrisches Ein- und Ausströmverhalten der Hydraulikflüssigkeit in Bezug auf eine Längsachse der Turbinen 2, 25, 26, 18 erzielt werden kann.

Stromabwärts der Zahnradpumpe 13 zweigt eine Rückströmleitung 5 mit einem Rückströmventil 15 von der Leitung 16 zwischen Zahnradpumpe 13 und erster Sammelleitung 4 ab. Diese verbindet einen Ausgang der Zahnradpumpe 13 mit dem Flüssigkeitsbehälter 10, so dass bei geöffnetem Rückströmventil 15 keine Hydraulikflüssigkeit von der Zahnradpumpe 13 in die erste Sammelleitung 4 gefördert, sondern diese umgehend zurück in den Flüssigkeitsbehälter 10 geleitet wird. Auf diese Weise kann durch Öffnen des Rückströmventils 15 ein Antrieb der Abtriebswelle 39 bei Betrieb des Motors unterbrochen werden. Die Rückströmleitung 5 mit dem Rückströmventil 15 ermöglicht es somit, einen Leerlaufbetrieb des Motors bei direkter Anbindung bzw. Kopplung des Getriebes an den Motor einzustellen. Dadurch kann auf eine zusätzliche Kupplung zwischen Motor und Getriebe verzichtet werden. Die Rückströmleitung 5 weist vorliegend eine strömungsgünstige bogenförmige Leitungsführung auf, wodurch im Leerlauf des Motors nur geringe Strömungsverluste auftreten.

Bei dem Rückströmventil 15 kann es sich insbesondere um ein elektrisch betätigbares Ventil, z.B. um ein Magnetventil oder ein Ventil mit einem elektrischen Stellantrieb handeln. Zum Betätigen (Öffnen und/oder Schließen) des Rückströmventils 15 kann die Recheneinheit z.B. ein entsprechendes Ansteuersignal an dieses senden, um beispielsweise eine Magnetspule zu bestromen oder einen elektrischen Stellantrieb anzutreiben. Ein Öffnungsquerschnitt des Rückströmventils 15 kann im Wesentlichen einem Querschnitt der Rückströmleitung 5 entsprechen, so dass das Rückströmventil 15 keine oder nur geringe Strömungsverluste verursacht.

Um ein benötigtes Drehmoment zum Antrieb des Fahrzeugs an der Abtriebswelle 39 bereitzustellen, wird dieses von der Recheneinheit bestimmt und die Einlassventile 3 der einzelnen Turbinen 2, 25, 26, 18 werden abhängig von dem benötigten Drehmoment gesteuert. Das benötigte Drehmoment an der Abtriebswelle 39 kann beispielsweise von der Recheneinheit basierend auf einem Fahrerwunschmoment, einer Drehzahl des Motors und/oder einer Fahrgeschwindigkeit des Fahrzeugs bestimmt werden. Dabei kann das Fahrerwunschmoment z.B. auf einer Gaspedal-/Gashebelstellung (nicht dargestellt) des Fahrzeugs basieren.

Insbesondere kann die Recheneinheit ein Einlassventil 3 einer der vier Turbinen 2, 25, 26, 18 öffnen, wenn das benötigte Drehmoment an der Abtriebswelle 39 größer als eine erste vorbestimmte Drehmomentschwelle ist. Die erste vorbestimmte Drehmomentschwelle kann dabei auf einen Wert festgelegt werden, der sicherstellt, dass bei Überschreiten desselben ein Antrieb der Abtriebswelle 39 von einem Fahrer gewünscht ist. Beispielsweise kann dieser Wert auf null gesetzt werden. Um Toleranzen bei der Bestimmung des benötigten Drehmoments an der Abtriebswelle 39 zu berücksichtigen, kann der Wert größer null, z.B. in einem Bereich von 0% bis 0,7% des maximalen Abtriebsmoments gewählt werden. Durch das Öffnen des Einlassventils 3 kann Hydraulikflüssigkeit in die zugehörige Turbine 2, 25, 26, 18 geleitet und diese dadurch angetrieben werden. Dabei kann die Recheneinheit das Einlassventil 3 derjenigen Turbine 2, 25, 26, 18 öffnen, die einen Kettentrieb antreibt, dessen Übersetzungsverhältnis geeignet ist, das benötigte Drehmoment an der Abtriebswelle 39 bereitzustellen, während die Einlassventile 3 der anderen Turbinen 2, 25, 26, 18 geschlossen bleiben. Dazu können beispielsweise die Übersetzungsverhältnisse der einzelnen Kettentriebe in der Recheneinheit gespeichert sein, anhand derer in Verbindung mit dem an der Turbinenwelle 17 anliegenden Drehmoment ein mögliches Abtriebswellenmoment bestimmt werden kann.

Die Recheneinheit kann das benötigte Drehmoment an der Abtriebswelle 39 mit den möglichen Abtriebswellenmomenten der einzelnen Kettentriebe vergleichen und die Turbine 2, 25, 26, 18 auswählen, welche den geeigneten Kettentrieb antreibt. Das Einlassventil 3 der gewählten Turbine 2, 25, 26, 18 kann für eine bestimmte Zeit geöffnet bleiben und nachfolgend wieder geschlossen werden. Beispielsweise kann das Einlassventil 3 der Turbine 2, 25, 26, 18 geöffnet bleiben, solange ein von dieser angetriebene Kettentrieb das benötigte Drehmoment z.B. in einem bestimmten Motordrehzahlbereich bereitstellen kann. Wenn dies nicht mehr der Fall ist, kann das Einlassventil 3 dieser Turbine 2, 25, 26, 18 geschlossen und ein Einlassventil 3 einer Turbine 2, 25, 26, 18, die einen Kettentrieb mit einem anderen Übersetzungsverhältnis antreibt, geöffnet werden, sofern das benötigte Drehmoment an der Abtriebswelle 39 noch immer größer als die erste vorbestimmte Drehmomentschwelle ist. Es ist ebenso möglich, dass der Fahrer des Fahrzeugs über eine manuelle Eingabe, z.B. auf einem Display (nicht dargestellt) des Fahrzeugs, eine Turbine 2, 25, 26, 18 auswählt, deren Einlassventil 3 geöffnet werden soll. Auf diese Weise kann der Fahrer gezielt ein Übersetzungsverhältnis zwischen Antriebswelle und Abtriebswelle wählen. Diese gezielte manuelle Auswahl kann von der Recheneinheit gegenüber einer automatische Auswahl einer Turbine 2, 25, 26, 18 zum Antrieb eines Kettentriebs in Abhängigkeit des benötigten Drehmoments an der Abtriebswelle 39 priorisiert werden.

Wenn das benötigte Drehmoment an der Abtriebswelle 39 kleiner als eine zweite vorbestimmte Drehmomentschwelle ist, kann die Recheneinheit das Rückströmventil 15 öffnen. Die zweite vorbestimmte Drehmomentschwelle kann dabei auf einen gleichen Wert wie die erste vorbestimmte Drehmomentschwelle festgelegt werden. Es ist ebenso möglich, dass die zweite vorbestimmte Drehmomentschwelle größer oder kleiner als die erste vorbestimmte Drehmomentschwelle gewählt wird. Das benötigte Drehmoment an der Abtriebswelle 39 kann beispielsweise nach einem Start des Motors, solange der Fahrer noch kein Wunschmoment z.B. über das Gaspedal anfordert, kleiner als die zweite vorbestimmte Drehmomentschwelle sein. Es ist ebenso möglich, dass der Fahrer das Rückströmventil 15 über eine manuelle Eingabe, z.B. auf dem Display des Fahrzeugs oder mittels eines Schalters (nicht dargestellt), direkt öffnen und/oder schließen kann, um den Leerlaufbetrieb des Motors ein- oder abzustellen.

Insbesondere kann die Recheneinheit das Rückströmventil 15 bei einem Start des Motors automatisch öffnen. Somit ist sichergestellt, dass das Fahrzeug nicht ungewollt losfährt. Sobald der Fahrer dann z.B. über das Gaspedal ein Wunschmoment anfordert und das benötigte Drehmoment an der Abtriebswelle 39 die zweite vorbestimmte Drehmomentschwelle überschreitet, kann die Recheneinheit das Rückströmventil 15 schließen und ein Einlassventil 3 einer der vier Turbinen 2, 25, 26, 18 öffnen. Der Start des Motors kann z.B. mittels einer manuellen Eingabe auf dem Display des Fahrzeugs erfolgen. Der Startbefehl kann von dort an die Recheneinheit des Getriebes gesendet werden. In gleicher Weise kann das Fahrzeug wieder gestoppt werden. Es ist ebenso möglich, dass das Fahrzeug über einen Schalter (nicht dargestellt) zum Starten und Stoppen des Motors verfügt.

Ein weiteres Ausführungsbeispiel für eine Turbine 2a, wie sie in dem in Figur 1 dargestellten Getriebe zum Einsatz kommen kann, ist in den Figuren 2 und 3 dargestellt. Dabei zeigt Figur 2 einen Querschnitt und Figur 3 eine Seitenansicht der Turbine 2a.

Die Turbine 2a umfasst ein Gehäuse 41 in dem vorliegend ein Rotor 29 außermittig angeordnet ist. Der Rotor 29 ist vorliegend als Turbinenfreilauf 27, 37 ausgeführt, der einen Innenring 37, der fest mit der Turbinenwelle 17 verbunden ist, sowie einen Außenring 27 umfasst, an dem die Turbinenschaufeln 7 mittels Scharnieren 38 beweglich befestigt sind. Über die Scharniere 38 können die Turbinenschaufeln 7 von einer radialen Richtung in eine tangentiale Richtung des Turbinenfreilaufs 27, 37 bewegt werden. Unter einer radialen Richtung des Turbinenfreilaufs 27, 37 soll vorliegend eine Richtung senkrecht zu einer Oberfläche des Außenrings 27 des Turbinenfreilaufs 27, 37 verstanden werden. Dementsprechend soll unter einer tangentialen Richtung des Turbinenfreilaufs 27, 37 eine Richtung tangential zu einer Oberfläche des Außenrings 27 des Turbinenfreilaufs 27, 37 verstanden werden. Die Scharniere 38 erlauben vorliegend eine Klappbewegung um einen Winkel im Bereich von 80° bis 100°, insbesondere um einen Winkel von 90° aus der radialen Richtung in die tangentiale Richtung des Turbinenfreilaufs 27, 37.

Der Außen- und Innenring 27, 37 des Turbinenfreilaufs 27, 37 können gegeneinander sperren (Mitnahmemodus) oder freilaufen (Freilaufmodus). Insbesondere kann sich der Turbinenfreilauf 27, 37 in einer Drehrichtung der Turbine 2a im Mitnahmemodus und entgegen der Drehrichtung der Turbine 2a im Freilaufmodus befinden.

Das Gehäuse 41 der Turbine 2a ist zweiteilig ausgeführt, wobei die beiden nicht näher bezeichneten Gehäuseteile mittels zweier Verschraubungen 42, 47 miteinander verbunden sind. Zwischen einer Innenseite jedes der Gehäuseteile und den Stirnseiten des Innenrings 37 ist in axialer Richtung der Turbine 2a jeweils ein Dichtring 40 angebracht.

Im Gegensatz zu den in Figur 1 gezeigten Turbinen 2, 25, 25, 18 sind der Eintrittskanal 34 und der Austrittskanal 31 der hier vorliegenden Turbine 2a auf derselben Seite angeordnet. Diese befinden sich in einer Ebene und sind in vertikaler Richtung übereinander angeordnet. Durch die außermittige Anordnung des Turbinenfreilaufs 27, 37 sind in dem Gehäuse 41 ein zu der Turbinenwelle 17 konzentrischer Umlaufkanal 12 und ein weiterer Kanal 33, der einen Sperrbereich 33 darstellt, ausgebildet. Der Umlaufkanal 12 weist vorliegend eine Kreisbogenform auf und ist so ausgestaltet, dass ein Mittelpunktswinkel eines seiner Form zugrundeliegenden Kreisbogens 180° beträgt.

Die beiden Kanäle 12, 33 haben einen unterschiedlichen Durchmesser, wobei vorliegend ein Durchmesser des Umlaufkanals 12 im Wesentlichen einer Länge der Turbinenschaufeln 7 entspricht, während ein Durchmesser des weiteren Kanals 33 kleiner als die Länge der Turbinenschaufeln 7 ist. Der Begriff "im Wesentlichen einer Länge der Turbinenschaufeln 7 entsprechen" soll insbesondere bedeuten, dass der Durchmesser des Umlaufkanals 12 gerade so viel größer als die Länge der Turbinenschaufeln 7 ist, dass diese sich in radialer Richtung des Turbinenfreilaufs 27, 37 erstrecken können, ohne eine Innenseite des Gehäuses 41 zu berühren.

Der Umlaufkanal verbindet den Eintrittskanal 34 und den Austrittskanal 31 der Turbine 2a und in dem Umlaufkanal 12 erstrecken sich die Turbinenschaufeln 7 in radialer Richtung des Rotors, um Hydraulikflüssigkeit zu fördern. Wenn das Einlassventil 3 der Turbine 2a geöffnet ist, so kann diese von der Hydraulikflüssigkeit angetrieben werden, die mit einer zu dem Druck in der ersten Sammelleitung 4 korrespondierenden Strömungsgeschwindigkeit vₑᵢₙ in die Turbine 2a eintritt. Dabei werden die in dem Umlaufkanal 12 befindlichen Turbinenschaufeln 7, die sich in radialer Richtung des Turbinenfreilaufs 27, 37 erstrecken, mit einer hydraulischen Kraft beaufschlagt. Insbesondere kann durch den Eintrittskanal 34 mit der Strömungsgeschwindigkeit vₑᵢₙ in den Umlaufkanal 12 tangential eintretende Hydraulikflüssigkeit auf die im Umlaufkanal 12 befindlichen Vorderseiten der Turbinenschaufeln 7 drücken und somit eine Rotation des Rotors 29 in Strömungsrichtung der Hydraulikflüssigkeit bewirken. Die Hydraulikflüssigkeit kann nach dem Umlauf im Umlaufkanal 12 mit einer Strömungsgeschwindigkeit vₐᵤₛ durch den Austrittskanal 31 tangential aus der Turbine 2a austreten. Dies kann insbesondere mit einem konstanten Moment und mit tangentialer Wirkung erfolgen, d.h. die Strömungsrichtung der Hydraulikflüssigkeit kann an jedem Punkt im Umlaufkanal 12 tangential zu dessen Kreisbogenform sein, wobei der Druck pₑᵢₙ der Hydraulikflüssigkeit im Eintrittskanal 34 nahezu gleich dem Druck pₐᵤₛ der Hydraulikflüssigkeit im Austrittskanal 31 ist. Mit anderen Worten kann die tangentiale Wirkung an jedem Punkt während des gesamten Umlaufs der Hydraulikflüssigkeit im Umlaufkanal bestehen, wodurch ein hoher Wirkungsgrad erreicht werden kann.

Der Kanal 33, welcher den Sperrbereich 33 darstellt, ist zwischen dem Austrittskanal 31 und dem Eintrittskanal 34 ausgebildet. In diesem erstrecken sich die Turbinenschaufeln 7 vorzugsweise in tangentialer Richtung des Rotors 29 und fördern keine Hydraulikflüssigkeit. Mittels des Sperrbereichs 33 kann zumindest teilweise, vorzugsweise vollständig, verhindert werden, dass Hydraulikflüssigkeit, die sich im Bereich des Austrittskanals 31 befindet, zurück zum Eintrittskanal 34 gelangen kann. Somit kann verhindert werden, dass bezüglich der in der Turbine 2a umlaufend strömenden Hydraulikflüssigkeit ein "Kurzschluss" erfolgt.

Die Sperrwirkung wird vorliegend durch ein Zusammenwirken der beweglichen Turbinenschaufeln 7 mit einer Geometrie des Turbinengehäuses 41 in dem Sperrbereich 33 realisiert. Dabei kann ein Querschnitt des Sperrbereichs 33 mittels der Turbinenschaufeln 7 versperrt werden. Dies wird anhand der beiden Turbinenschaufeln 7s1, 7s2, welche sich in den Sperrbereich 33 befinden, deutlich. Der Sperrbereich 33 ist dabei derart ausgebildet, dass eine Bewegung der Turbinenschaufeln 7s1, 7s2 von der radialen Richtung in die tangentiale Richtung des Rotors 29 bewirkt wird. In dem vorliegenden Ausführungsbeispiel weist der Sperrbereich 33 in der Mitte zwischen Austritts- und Eintrittskanal 31, 34 seinen kleinsten Durchmesser auf. Dadurch werden die Turbinenschaufeln 7s1, 7s2 bis zur Mitte des Sperrbereichs 33 kontinuierlich eingeklappt und versperren dabei den Querschnitt. Nachfolgend können sich die Turbinenschaufeln 7s1, 7s2 durch die Aufweitung des Sperrbereichs kontinuierlich von der tangentialen zurück in die radialen Richtung des Rotors 29 bewegen und diese im Eintrittskanal 34 wieder einnehmen.

In einer Hälfte der Turbine 2a, welche den Umlaufkanal 12 umfasst, weist diese einen ersten Radius r1 zwischen einer Mittelachse der Turbinenwelle 17 und einer äußeren Oberfläche des Gehäuses 41 auf, der insbesondere der Hälfte des Durchmessers der größten Turbine 2 aus Figur 1 entsprechen kann. In einer Hälfte, welche den Sperrbereich 33 umfasst, weist die Turbine 2a hingegen einen zweiten Radius r2 zwischen der Mittelachse der Turbinenwelle 17 und der äußeren Oberfläche des Turbinengehäuses 41 auf, der kleiner als der erste Radius r1 ist. Dadurch kann eine Breite r1 + r2 der Turbine 2a gegenüber einer Breite der Turbine 2, die deren Durchmesser entspricht, deutlich reduziert werden, so dass der benötigte Bauraum für das Getriebe kleiner ausfallen kann. Damit ermöglicht die Turbine 2a ein deutlich kompakteres Design des Turbinengehäuses 41 bei gleichzeitiger Steigerung der Effizienz.

Figur 4 zeigt in vereinfachter schematischer Schnittdarstellung einen Querschnitt durch einen Planetenradsatz 120, der in dem in Figur 1 dargestellten Getriebe zum Einsatz kommen kann. Dieser kann insbesondere dazu eingerichtet sein, eine Rückwärtsfahrt des Fahrzeugs zu ermöglichen.

Vorliegend enthält der Planetenradsatz das Sonnenrad 61 mit der Sonnenradwelle 19, einen Planetenradträger 62 mit drei Planetenrädern 58 und ein Hohlrad 60. Das Sonnenrad 61 und die Planetenräder 58 weisen jeweils eine nicht näher bezeichnete Außenverzahnung und das Hohlrad 60 weist eine Innenverzahnung 63 auf. Zusätzlich weist das Hohlrad 60 auf einer äußeren Oberfläche eine Außenverzahnung 59 auf, in welche die Kette 133 eingreift, die den Planetenradsatz 120 mit dem zugehörigen ersten Zahnrad 110 koppelt. Das Hohlrad 60 kann zweckmäßigerweise drehbar auf der Abtriebswelle 39 gelagert und der Planetenradträger 62 kann fest mit dieser verbunden sein (nicht dargestellt).

Wenn die Turbine 18 über das Einlassventil 3 mit Hydraulikflüssigkeit beaufschlagt wird, so wird das Hohlrad 60 des Planetenradsatzes 120 über das erste Zahnrad 110 und die Kette 133 angetrieben und dreht sich in Drehrichtung der Turbine 18, welche der üblichen Drehrichtung der Abtriebswelle 39 bei Vorwärtsfahrt des Fahrzeugs entspricht.

Da in diesem Fall die Abtriebswelle 39 nicht über eines der zweiten Zahnräder 65, 80, 100 angetrieben wird, steht der Planetenradträger 62 still. Bei Bedarf kann dieser zusätzlich, z.B. mittels eines Bremsbands (nicht dargestellt), blockiert werden.

Bei stillstehendem Planetenradträger 62 laufen die Planetenräder 58 auf der Innenverzahnung 63 des Hohlrads 60 und der Außenverzahnung des Sonnenrads 61 ab. Dadurch dreht sich das Sonnenrad 61 und die mit diesem verbundene Sonnenradwelle 19 in entgegengesetzter Richtung zu dem Hohlrad 60 und somit auch entgegen der üblichen Drehrichtung der Abtriebswelle 39. Die Sonnenradwelle 19 stellt, wie oben beschrieben, den zweiten Ausgang 19 der Abtriebswelle 39 dar und ist mit einem oder mehreren Rädern des Fahrzeugs verbunden, wodurch eine Rückwärtsfahrt desselben ermöglicht wird. Aufgrund eines großen Übersetzungsverhältnisses zwischen Hohlrad 60 und Sonnenrad 61 kann zudem eine Drehzahl der Sonnenradwelle 19 und damit eine Geschwindigkeit des Fahrzeugs bei Rückwärtsfahrt begrenzt werden.

Wenn nicht die Turbine 18, sondern eine der anderen Turbinen 2, 25, 26 mit Hydraulikflüssigkeit beaufschlagt wird und somit ein anderer Kettentrieb die Abtriebswelle 39 antreibt, dreht sich der mit der Abtriebswelle 39 verbundene Planetenradträger 62 in deren üblicher Drehrichtung und treibt mittels der Planetenräder 58 das Sonnenrad 61 mit der Sonnenradwelle 19 an. In diesem Fall dreht sich die Sonnenradwelle 19 mit der gleichen Geschwindigkeit in die gleiche Richtung wie die Abtriebswelle 39 und der Planetenradsatz 120 trägt nicht zu dem Übersetzungsverhältnis zwischen Antriebs- und Abtriebs- bzw. Sonnenradwelle 14. 39, 19 bei.

Alternativ oder zusätzlich können das Sonnenrad 61, der Planetenradträger 62 und/oder das Hohlrad 60 in bekannter Weise angetrieben oder blockiert werden, um mittels des Planetenradsatzes 120 zusätzliche Übersetzungsverhältnisse zu realisieren. Auf diese Weise sind z.B. bis zu zwölf Übersetzungen bzw. Gänge mit dem hier vorgestellten Getriebe möglich.

### Bezugszeichenliste:

1, erster Ausgang der Abtriebswelle
2, 2a, 25, 26, 18 Turbinen
3 Einlassventil
4 Sammelleitung
5 Rückströmleitung
7, 7s1, 7s2 Turbinenschaufel
9 verschließbare Öffnung Flüssigkeitsbehälter
10 Flüssigkeitsbehälter
12 Umlaufkanal
13 Pumpe, Zahnradpumpe
14 Antriebswelle
15 Rückströmventil
17 Turbinenwelle
19 zweiter Ausgang der Abtriebswelle, Sonnenradwelle
23 Auslassventil
24 Lagerung, Lager
27 Turbinenfreilauf Außenring
29 Rotor
31 Austrittskanal
33 Kanal, Sperrbereich
34 Eintrittskanal
37 Turbinenfreilauf-Innenring
38 bewegliche Befestigung, Scharnier
39 Abtriebswelle
40 Dichtring
41 Gehäuse
42, 47 Verschraubungen Gehäuse
50 Rücklaufleitung
55, 70, 90 110 erstes Zahnrad
58 Planetenrad
59 Außenverzahnung Hohlrad
60 Hohlrad
61 Sonnenrad
62 Planetenradträger
63 Innenverzahnung Hohlrad
65, 80, 100 zweites Zahnrad
120 Planetenradsatz
130, 131, 132, 133 Kette

## Patentansprüche

1. Getriebe für ein Fahrzeug aufweisend
- eine Antriebswelle (14),
- einen Flüssigkeitsbehälter (10) zur Speicherung von Hydraulikflüssigkeit;
- mindestens eine Turbine (2, 2a, 25, 26, 18), die auf einer Turbinenwelle (17) mit mindestens einem ersten Zahnrad (55, 70, 90, 110) angeordnet ist und in ihrem Eintrittskanal (34) ein Einlassventil (3) aufweist, das dazu eingerichtet ist, Hydraulikflüssigkeit in die Turbine (2, 2a, 25, 26, 18) zu leiten, um diese anzutreiben;
- eine Pumpe (13), die mit der Antriebswelle (14) verbunden und dazu eingerichtet ist, Hydraulikflüssigkeit aus dem Flüssigkeitsbehälter (10) mit einem bestimmten Druck zu dem Einlassventil (3) der mindestens einen Turbine (2, 2a, 25, 26, 18) zu fördern;
- eine Rücklaufleitung (50), die einen Austrittskanal (31) der mindestens einen Turbine (2, 2a, 25, 26, 18) mit dem Flüssigkeitsbehälter (10) verbindet;
- eine Abtriebswelle (39), auf der ein oder mehrere zweite Zahnräder (65, 80, 100) angeordnet sind; und
- mindestens eine Kette (130, 131, 132, 133), die mit dem mindestens einen ersten Zahnrad (55, 70, 90, 110) der Turbinenwelle (17) der mindestens einen Turbine (2, 2a, 25, 26, 18) und einem der zweiten Zahnräder (65, 80, 100) der Abtriebswelle (39) in Eingriff bringbar ist.

2. Getriebe nach Anspruch 1, wobei die mindestens eine Turbine (2, 2a, 25, 26, 18) einen Rotor (29) mit zwei oder einer Vielzahl von Turbinenschaufeln (7, 7s1, 7s2) umfasst, der fest mit der Turbinenwelle (17) verbunden oder über einen Turbinenfreilauf (27, 37) mit der Turbinenwelle (17) verbindbar ist.

3. Getriebe nach Anspruch 2, wobei die Vielzahl von Turbinenschaufeln (7, 7s1, 7s2) beweglich an dem Rotor (29) befestigt ist.

4. Getriebe nach Anspruch 3, wobei die beweglichen Turbinenschaufeln (7, 7s1, 7s2) dazu eingerichtet sind, von einer radialen Richtung in eine tangentiale Richtung des Rotors (29) bewegt zu werden.

5. Getriebe nach Anspruch 4, wobei die mindestens eine Turbine (2, 2a, 25, 26, 18) einen zu der Turbinenwelle (17) konzentrischer Umlaufkanal (12) aufweist, der den Eintrittskanal (34) und den Austrittskanal (31) verbindet, und in dem sich die Turbinenschaufeln (7) in radialer Richtung des Rotors (29) erstrecken.

6. Getriebe nach Anspruch 5, wobei die mindestens eine Turbine (2, 2a, 25, 26, 18) einen Sperrbereich (33) aufweist, der zwischen dem Austrittskanal (31) und dem Eintrittskanal (34) angeordnet ist, und in dem sich die Turbinenschaufeln (7s1, 7s2) in tangentialer Richtung des Rotors (29) erstrecken.

7. Getriebe nach Anspruch 5 oder 6, wobei der Eintrittskanal (34) dazu eingerichtet ist, die Hydraulikflüssigkeit in tangentialer Richtung zu einem zu der Turbinenwelle (17) konzentrischen Kreis in den Umlaufkanal (12) einzuleiten, und der Austrittskanal (31) dazu eingerichtet ist, die Hydraulikflüssigkeit in tangentialer Richtung zu dem zu der Turbinenwelle (17) konzentrischen Kreis aus dem Umlaufkanal (12) herauszuleiten.

8. Getriebe nach Anspruch 6 und 7, wobei der Umlaufkanal (12) und der Sperrbereich (33) durch eine außermittige Anordnung des Rotors (29) in dem Gehäuse (41) gebildet sind.

9. Getriebe nach mindestens einem der vorstehenden Ansprüche, wobei jedes der zweiten Zahnräder (65, 80, 100) eine andere Zähnezahl aufweist.

10. Getriebe nach mindestens einem der vorstehenden Ansprüche, wobei jedes der zweiten Zahnräder (65, 80, 100) über einen Zahnradfreilauf mit der Abtriebswelle (39) verbindbar ist.

11. Getriebe nach mindestens einem der vorstehenden Ansprüche, wobei die Abtriebswelle (39) mit einem Planetenradsatz (120) verbunden ist.

12. Getriebe nach Anspruch 11, wobei der Planetenradsatz (120) ein Sonnenrad (61), einen Planetenradträger (62) mit mindestens einem Planetenrad (58) und ein Hohlrad (60) enthält, und wobei das Hohlrad (60) eine Außenverzahnung (59) aufweist.

13. Getriebe nach Anspruch 12, wobei die mindestens eine Kette (130, 131, 132, 133) mit der Außenverzahnung (59) des Hohlrads (60) und dem mindestens einen ersten Zahnrad (55, 70, 90, 110) der Turbinenwelle (17) in Eingriff bringbar ist.

14. Getriebe nach mindestens einem der vorstehenden Ansprüche, ferner umfassend eine Recheneinheit, die dazu eingerichtet ist, ein benötigtes Drehmoment an der Abtriebswelle (39) zu bestimmen und das Einlassventil (3) der mindestens einen Turbine (2, 2a, 25, 26, 18) in Abhängigkeit von dem benötigten Drehmoment zu steuern.

15. Getriebe nach Anspruch 14, wobei die Recheneinheit dazu eingerichtet ist, das Einlassventil (3) der mindestens einen Turbine (2, 2a, 25, 26, 18) zu öffnen, wenn das benötigte Drehmoment an der Abtriebswelle (39) größer als eine erste vorbestimmte Drehmomentschwelle ist.

16. Getriebe nach Anspruch 14 oder 15, wobei die Recheneinheit dazu eingerichtet ist, das Rückströmventil (15) zu öffnen, wenn das benötigte Drehmoment an der Abtriebswelle (39) kleiner als eine zweite vorbestimmte Drehmomentschwelle ist.

17. Verfahren zum Betreiben eines Getriebes nach einem der vorstehenden Ansprüche umfassend die Schritte
- Bestimmen eines benötigten Drehmoments an einer Abtriebswelle (39) des Getriebes, und
- Steuern eines Einlassventils (3) von mindestens einer Turbine (2, 2a, 25, 26, 18) in Abhängigkeit von dem benötigten Drehmoment.

18. Verfahren nach Anspruch 17, ferner umfassend die Schritte
- Öffnen des Einlassventils (3) der mindestens einen Turbine (2, 2a, 25, 26, 18), wenn das benötigte Drehmoment an der Abtriebswelle (39) größer als eine erste vorbestimmte Drehmomentschwelle ist; und
- Öffnen eines Rückströmventils (15) in einer Rückströmleitung (5), die einen Ausgang einer Pumpe (13) des Getriebes mit einem Flüssigkeitsbehälter (10) verbindet, wenn das benötigte Drehmoment an der Abtriebswelle (39) kleiner als eine zweite vorbestimmte Drehmomentschwelle ist.

19. Verwendung eines Getriebes nach mindestens einem der Ansprüche 1 bis 16 in einem Antrieb eines Fahrzeugs.

20. Fahrzeug, umfassend ein Getriebe nach mindestens einem der Ansprüche 1 bis 16.
